# EUROPEAN PATENT SPECIFICATION

(11) **EP 3 802 462 B1**
(45) Date of publication and mention of the grant of the patent: **13.12.2023**
(21) Application number: 19727893.0
(22) Date of filing: 05.06.2019
(51) Int. Cl.: C04B 40/02, B09B 3/40, C04B 18/02, C04B 28/10

(54) **METHOD OF PRODUCING A METAL CARBONATE BONDED ARTICLE AND METAL CARBONATE BONDED ARTICLE**
VERFAHREN ZUR HERSTELLUNG EINES METALLCARBONATGEBUNDENEN ARTIKELS UND METALLCARBONATGEBUNDENER ARTIKEL
PROCÉDÉ DE PRODUCTION D'UN ARTICLE LIÉ DE CARBONATE DE MÉTAL ET ARTICLE LIÉ DE CARBONATE DE MÉTAL

(30) Priority: 05.06.2018 EP 18176128; 08.04.2019 EP 19020271
(43) Date of publication of application: 14.04.2021
(73) Proprietor: VITO NV, 2400 Mol (BE)
(72) Inventor: SUMIT, Srivastava, 2400 Mol (BE); QUAGHEBEUR, Mieke, 2400 Mol (BE); SNELLINGS, Ruben, 2400 Mol (BE); COOL, Pegie, 3140 Keerbergen (BE)
(74) Representative: AWA Benelux
(86) International application number: PCT/EP2019/064579
(87) International publication number: WO 2019/234066

(56) References cited:
- WO-A1-2009/132692
- WO-A1-2016/030531
- SUMANTA DAS ET AL: "Synthesis and Properties of a Novel Structural Binder Utilizing the Chemistry of Iron Carbonation", ACS APPLIED MATERIALS & INTERFACES, vol. 6, no. 11, 11 June 2014 (2014-06-11), pages 8295-8304, XP055615865, US ISSN: 1944-8244, DOI: 10.1021/am5011145

## Description

### Technical field

The present invention is related to methods of producing an article bonded by carbonates of one or more transition and/or post-transition metals, more in particular by iron and/or zinc carbonates. The present invention is also related to the carbonate bonded articles obtained from these methods.

### Background art

Anthropogenic emission of CO₂ is accepted as being responsible for changes in global climate and potentially irreversible damaging impacts on ecosystems and societies. Various technologies designed to reduce the amount of greenhouse gases such as CO₂ in the atmosphere demonstrate that this is an active research area through the developed and developing world. The sequestration of CO₂ offers the potential to prevent CO₂ from entering the atmosphere (e.g. by removal of the CO₂ from an industrial flue gas), or a potential route to extraction of CO₂ that is already present in the atmosphere. Physical trapping of CO₂, such as injection of CO₂ into depleted natural gas reservoirs under the seabed or into the deep ocean has not yet been proven to be a leakproof technology option. Chemical sequestration on the other hand offers the potential to trap the CO₂ virtually permanently.

Many industrial processes produce metal and metal oxide wastes that require disposal. For example, particulate waste that includes some metallic iron or steel powder can be generated in significant amounts as bag-house dust waste during the Electric Arc Furnace (EAF) manufacturing process of steel and from the shot-blasting operations of structural steel sections. The traditional means of disposing EAF and shot-blasting dust is landfilling as it is not economically feasible to recycle the iron from the dust. Several million tons of such waste material is being landfilled at great costs all over the world. It is known that secondary carbonate rocks formed during mineral trapping demonstrate mechanical strength, which suggests the possibility of using mineral trapping in conjunction with a binder for the development of a sustainable construction material.

WO 2009/132692A1 describes a process involving production of "carbonated articles" from industrial waste rich in calcium silicate. This method is explicit in requiring an alkaline earth metal silicate phase. Besides this publication, there have been other disclosures on the possibility of carbonating waste metallic iron powder to develop sustainable binder systems for building materials, such as concrete. The natural carbonation of iron a slow process, with a slow rate of product formation. Hence in these earlier studies the carbonation reaction is always done in the presence of chosen additives to accelerate the carbonation reaction. For example in Das, Sumanta, et al. "Synthesis and properties of a novel structural binder utilizing the chemistry of iron carbonation." ACS applied materials & interfaces 6.11 (2014): 8295-8304, additives containing silica and alumina are added to facilitate iron dissolution and to obtain beneficial rheological and later-age properties. In US 8366820, powdered silica is one of the important and indispensable components of the reaction. In this reference the silica is added as slag or fly ash. In US 2016/0264466, a combination of powdered additives is being used, with a first powdered additive comprising silica, a second powdered additive comprising calcium carbonate, and a powdered clay. Utilization of these additives not only changes the reaction kinetics but the presence of these additives in the end products also limits the application of the end product because the additives like fly ash and slag are variable in composition and rich in impurities.
Sumanta Das et al., "Synthesis and Properties of a Novel Structural Binder Utilizing the Chemistry of Iron Carbonation", ACS Applied Materials & Interfaces, 2014, Vol. 6, No. 11, pp. 8295-8304 discloses carbonating waste metallic iron powder. Chosen additives containing silica and alumina are added to facilitate iron dissolution.

### Summary of the invention

It is an objective of the present invention to simplify the state-of-the-art metal carbonation processes, still achieving a relatively much stronger end product with relatively much faster kinetics. It is an objective of the present invention to offer a method for improving the reaction kinetics and/or to eliminate/limit the reliance on the above mentioned additives while offering an end product of higher compressive strength. The resulting control on the purity of the end product will open new horizons for applications like additive manufacturing or catalysis.

As mentioned herein before, one of the problems with the current accelerated carbonation processed used for carbonation of iron is that they require the presence of chosen additives to convert the natural carbonation of iron into an economically feasible process. One of these additives reoccurring in each of the earlier iron carbonation processes is the mandatory reliance on silica-rich additives. It thus appears that powdered alkaline earth metal silica-rich additives are indispensable to accelerate these processes. As will become apparent from the further description hereinafter, in the instant procedure the mandatory reliance on alkaline earth metal silica-rich additives is being omitted. In fact, many of the additives used in literature seem to be having a negative effect on the strength development in the disclosed process.

That alkaline earth metal silicate is indeed presented as an indispensable additive in the carbonation reaction of metallic iron follows from Table 12 of US 8366820. This Table 12 demonstrates that there is no difference between the reaction of iron powder with or without Carbon dioxide in the presence of water and air (entries 1 and 2), only in the presence of silica (entry 5) the kinetics and carbonation process becomes industrially interesting.

Another issue with the existing methods based on the addition of chosen additives is the reaction time as well as the relatively low compressive strengths of the products. In these methods the carbonation process requires a number of days to complete, where the method of the instant invention is realized in a number of hours.

Also, with the prior art methods the formation of metal oxides cannot be excluded and the presence of such oxides has a negative effect on strength performance of the carbonated material. It is accordingly desirable to avoid the formation of metal oxides during the reaction.

To summarize, the prior art methods available for the carbonation of particulate iron (as an example of transition metals):
- require the presence of powdered silica source and other additives to make the process economically and technologically feasible,
- are slow, even with the use of the additives, with reaction processes requiring days to complete, while still resulting in relatively much lower compressive strengths,
- cannot avoid the formation of oxides which have a negative effect on the strength of the carbonated article.

According to a first aspect of the invention, there is therefore provided a method of producing a carbonate bonded article, as set out in the appended claims. The process of the present invention is based on the finding that the carbonate or bicarbonate ions formed by reaction of carbon dioxide with an aqueous source present in the precursor, react directly with the particulate sources of transition metal ions or post-transition metal ions to form a network connecting the metallic particles and giving strength to the final carbonated product.

The method of producing a carbonate bonded article comprises preparing a mixed precursor comprising or consisting of a particulate metal source comprising one or more metals and an aqueous source. In a next step, the method comprises shaping the mixed precursor to obtain a shaped precursor. In a next step, the method comprises reacting the shaped precursor with carbon dioxide at a temperature between 10°C and 150°C and a pressure of at least 1 bar. Under these conditions, the carbon dioxide reacts with the aqueous source to form carbonate or bicarbonate ions and the one or more metals react with the carbonate or bicarbonate ions and form carbonates of the one or more metals thus transforming the shaped precursor into the carbonate bonded article.

According to aspects of the invention, the one or more metals are transition and/or post-transition metals which make up at least 30% of the dry weight of the particulate metal source and/or the mixed precursor and/or the shaped precursor, preferably at least 40% by dry weight, preferably at least 50% by dry weight, preferably at least 60% by dry weight, preferably at least 75% by dry weight. The indicated amounts by dry weight advantageously refer to the amounts of the metal elements present in the particulate metal source, rather than the metal compounds. The mixed precursor is free from silica or comprises at most 30% by dry weight of silica, preferably at most 20% by dry weight, preferably at most 10% by dry weight, preferably at most 5% by dry weight.

The carbon dioxide is advantageously provided by providing a gas source comprising at least 15% by volume carbon dioxide, preferably at least 30% by volume carbon dioxide. In particular, the shaped precursor is placed in a reactor environment, wherein the reactor environment comprises or consists of the gas source.

According to a second aspect of the invention, there is provided a carbonate bonded article as set out in the appended claims. The carbonate bonded article can be obtained from methods according to the first aspect.

### Brief description of the figures

Aspects of the invention will now be described in more detail with reference to the appended drawings, wherein same reference numerals illustrate same features.
**Figure 1** represents a graph showing XRD-Rietveld analysis of an carbonate bonded article according to aspects of the present invention.

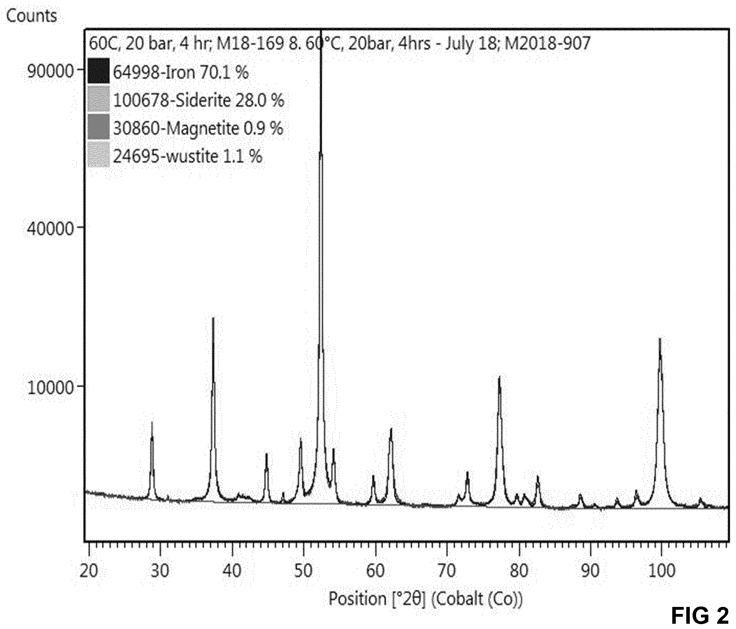

**Figure 2** represents a graph showing XRD-Rietveld analysis of a Siderite (FeCOs-mineral) carbonate bonded article according to aspects of the present invention.

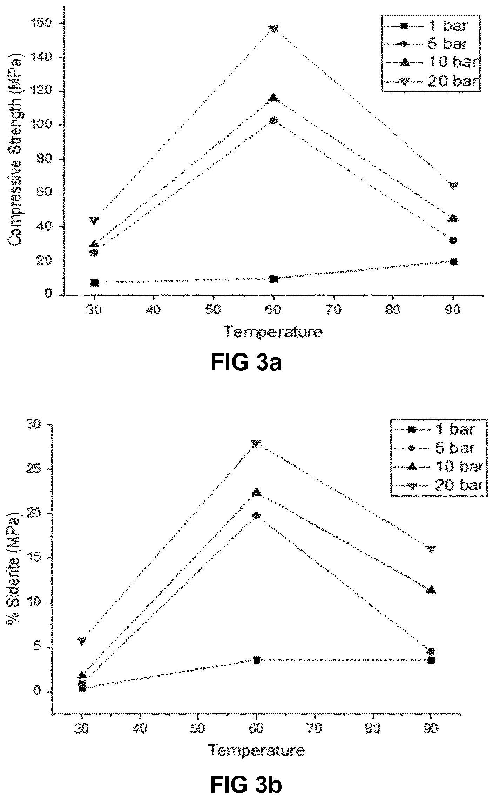

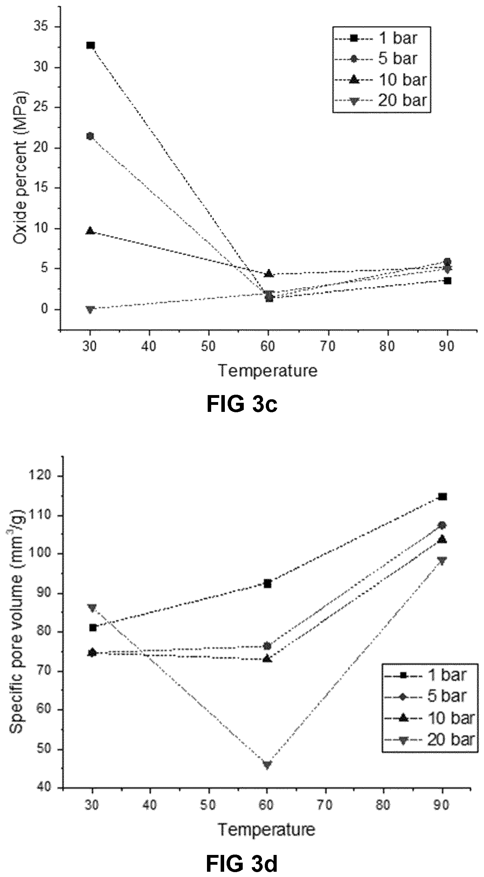

**Figures 3a****-d** represent the effect of variation in temperature and CO₂-pressure in methods according to the present invention on: (Fig 3a) Compressive Strength; (FIG 3b) % siderite product based on XRD; (FIG 3c) % oxide products based on XRD; and (FIG 3d) specific pore volumes.
**Figure 4** represents XRD-Rietveld analysis of Mn powder at a l/s ratio of 0.122 which was carbonated for 16 hours.
**Figure 5a** represents XRD-Rietveld analysis of Pb powder at a l/s ratio of 0.06 which was carbonated for 16h.
**Figure 5b** represents XRD-Rietveld analysis of Pb powder at a l/s ratio of 0.05 which was carbonated for 16h.

### Definitions

**Compressive strength:** The carbonated articles were directly tested for compressive strength following removal from the "*carbonation chamber*"*.* No further curing is required. The "*carbonated articles*" were on average about 23 mm in diameter and nearly 20 grams in weight (starting weight before carbonation, may increase by up to 7-8 percent due to additional carbonates). We used a 100 kN load cell and started to load the "carbonated article" at 0.5 mm/min. The load taken by the "carbonated article" keeps increasing till it fails. This is the maximum load which it can take. We divided this load by the surface area to get the compressive strength of the article (expressed in MPa). This gives us a standard idea about the strength of the sample.

Average compressive strength is used herein as the main representative parameter of the quality of the *"carbonated article".* The compressive strength was tested immediately (within 1 hour) after removal from the "*carbonation chamber*". The samples were removed from the *"carbonation chamber"* immediately (within <1 hour) after the *"carbonation process"* is over.

**XRD-Rietveld results:** After testing the compressive strength, we grinded the "carbonated article" to fine particles and performed XRD analysis. Using the XRD data, we performed "Rietveld analysis". This is a quantitative method to quantify (in per cent) the mineral composition of the product using XRD data. We focussed on two things:

**Percent siderite (iron carbonate formed):** The mineral form of the iron carbonate we are forming is called "*siderite*". The iron carbonate or siderite we are forming is responsible for the strength.

**Percent conversion (How much iron has reacted):** Anything other than iron carbonate does not appear to be contributing to the strength of the *"carbonated article".* These other products are mostly iron oxides if they are formed. In an ideal *"carbonated article"* we only have unreacted starting material and iron carbonate. Ideally, in the products resulting from the most efficient form of the invention, the percent iron carbonate and the percent conversion should be equal.

**Total Inorganic Carbon (TIC):** The TIC results show the amount of carbon released when the powdered product (used in XRD evaluation) is dissolved in acid. This can be further converted to % CO₂ in the system. This is one of the parameters which may help to calculate the amount of CO₂ present in the *"carbonated article".*

### Description of embodiments

The process of the present invention aims at addressing all of the aforementioned problems and comprises two main steps. In a first step (hereinafter referred to as preparing the transition metal-aqueous mix and/or a post-transition metal-aqueous mix) a moist powder mix is being prepared including a shaping treatment to enable handling of the transition or post-transition metal powder. In a second step (hereinafter The Carbonation Process) the moist-powder mix is exposed to CO₂ in a controlled environment at elevated pressure leading to the formation of a stable carbonated article with an industrially relevant compressive strength. It follows from the foregoing that the process takes place in a moist environment and comprises three main components: source of transition and/or post-transition metal ions, carbonate ions, and aqueous solution to facilitate the reaction.

### Step 1: Process: Preparing the metal-aqueous mix

An advantageously moist mix is first prepared by thorough mixing of a particulate metal source with an "*aqueous source*" manually or mechanically. This resulting moist powder mix will, from now on, be referred to as *"mixed precursor".*

The particulate metal source comprises or consists of one or more transition and/or post-transition metal compounds. The particulate metal source is preferably selected from particulate metallic iron and/or particulate metallic zinc. The transition and/or post-transition metal compounds can be sourced from various sources, such as transition and/or post-transition metal waste filings, slags, ashes, blasting shots. The term "particulate" refers to the powdered material with a D₅₀ smaller than or equal to 1mm; or shaped materials, e.g. fibers, sheets or bars.

The particulate metal source, e.g. of iron or zinc ions, could also be one of the alkaline salts or solutions of the one or more transition and/or post-transition metals. The solutions here refer to anything with a pH of 3.5 or more during the carbonation process, advantageously a pH of 5 or more. Most preferably, the pH should be 7 or more.

The particulate metal source can be directly used in some cases. For instance as hydroxides or silicates etc (Fe(OH)₂, Fe₂SiO₄, Zn(OH)₂, Zn₂SiO₄).

A transition metal advantageously refers to an element belonging to groups 4 to 11 of the periodic table of elements. A post transition metal advantageously refers to the elements Zn, Cd, Hg, Ga, In, TI, Sn, Pb, Bi. The list of transition and post transition metals (M) which can form metal carbonates of the general formula MCOs is advantageously selected from Mn, Fe, Co, Ni, Cu, Zn, Cd, and Pb.

The carbonates thus obtained can be referred to as anhydrous carbonates of transition and post transition metals listed in Class 14 of "New Dana Classification". In Dana's new carbonate classification, we have mineral carbonates of all these metals in Dana class 14, Anhydrous Carbonates. Of special interest is Dana type 14.01 Anhydrous Carbonates with Simple Formula A+ COs:
- The carbonates of Mn, Fe, Co, Zn, Cd, Ni belong to the Dana group 14.01.01 Calcite Group (Space Group: R3barc)
   ∘ Manganese: 14.01.01.04: Rhodochrosite MnCO3
   ∘ Iron (already done) : 14.01.01.03: Siderite Fe++CO3
   ∘ Cobalt: 14.01.01.05: Sphaerocobaltite CoCO3
   ∘ Zinc (already done): 14.01.01.06: Smithsonite ZnCO3
   ∘ Cadmium: 14.01.01.07: Otavite CdCO3
   ∘ Nickel: 14.01.01.08 Gaspeite NiCO3 : Hardly found in pure form in nature
- The carbonate of Pb belongs to Dana group 14.01.03 Aragonite Group (Orthorhombic: Pmcn).
   ∘ Lead: 14.01.03.04 Cerussite PbCO3

The "*aqueous source*" could also be in the form of steam, hydrates, or as solution of any other additive including alkalis and electrolytes. However, the most preferred form is water in liquid form. The aqueous source does not need to be present in the first step, but may be added in the second step.

The mixing can be performed immediately before the start of the next step of carbonation (mentioned later) or can be done few hours before the start of the carbonation step.

Additional granular materials, in particular inert or unreactive granular materials, can be added as filler. For instance unreactive sand, unreactive industrial waste, carbonates, etc. However, they are not needed as source of strength or as reaction stimulants. It is the desired forms of Iron or Zn carbonate which is the major source of strength of the carbonated article.

Consequently, the mix can be immediately carbonated or it can be cured for some duration before initiating the carbonation.

Once the mix is prepared, it has to be moulded into a desired shape before the carbonation can be initiated in step 2. This process will be referred as *"shaping"* from now on. The product of *"shaping"* will be referred as "*shaped precursor*" from now on.

The shaping can be performed in two different ways. In one preferred form of *"shaping",* the liquid to solid ratio is kept low enough that the mix can be press moulded into a desired shape. The article should be able to retain this shape even when it is removed from the mould. This will be called as "*pressed pellet*" from hereon.

In another preferred form of *"shaping",* the high liquid to solid ratio does not allow the mix to be pressed in the form of "*pressed pellet*"*.* In such scenarios, the article is not able to retain its shape if removed from the mould. However, the liquid content is low enough to allow the particles to be packed enough to interact physically with each other. Such systems will be called as "*moulded pellets*" from hereon.

Expressed differently, and within the context of the invention, the term "shaped precursor" is to cover both the "pressed pellet" and "moulded pellet" together into one term.

In a most preferred form of this invention, (water insoluble) granulated transition and/or post-transition metal powder is used as metal source and is mixed with water as aqueous source to prepare the *"mixed precursor".* For instance, a mix of granulated metallic iron or zinc with water at given liquid to solid (l/s) ratio.

The solid content of the mixed precursor can comprise the transition and/or post-transition metal compounds indicated above, in particular compounds of iron and/or zinc, in an amount of at least 10% by weight, preferably at least 20% by weight, preferably at least 30% by weight, preferably at least 40% by weight, preferably at least 50% by weight, preferably at least 60% by weight, preferably at least 75% by weight, preferably at least 90% by weight and preferably the solid content of the mixed precursor substantially consists of the transition and/or post transition metal compounds, e.g. the iron and/or zinc compounds. The solid content refers to the composition after evaporating moisture at 105°C. Compositions can be determined using XRD analysis.

Alternatively, or in addition, the content of the transition and/or post-transition metal elements, e.g. the metallic iron and/or zinc, in the mixed precursor advantageously amounts to at least 10% by weight, preferably at least 20% by weight, preferably at least 30% by weight, preferably at least 40% by weight, preferably at least 50% by weight, preferably at least 60% by weight, preferably at least 75% by weight, preferably at least 80% by weight, and preferably the solid content of the mixed precursor substantially entirely consists of the transition and/or post-transition metal, such as iron and/or zinc, (e.g., metallic iron and/or zinc powder).

In a preferred form of this invention, the "*pressed pellet*" can be prepared using a mix which does not lead to eviction of the liquid during the *"shaping"* process.

In another form of this invention, the mix does not need to be pressed but is prepared as a paste at a higher l/s ratio to prepare a "*moulded pellet*"*.*

The l/s ratio is advantageously kept low enough to allow the particles, in particular the starting granules to interact physically. Advantageously, the l/s ratio is 0.5 or less, advantageously the l/s ratio is between 0.01 and 0.5, advantageously between 0.02 and 0.4, advantageously between 0.03 and 0.3. Advantageously, the liquid to solid ratio is kept low enough that the mix can "*shaped*" to form the "*moulded pellet*"*.*

In another form of the invention, another source of transition or post-transition metal ion could be used for preparing the mix with water. For instance, Fe-silicate or Zn-silicates. When using such materials the overall silica content in the solid component of the mixed precursor is preferably kept below or equal to 20%, in particular below or equal to 10%, more in particular below or equal to 5%, even more in particular below or equal to 1%.

### Step 2: Process: The carbonation process

In addition to its dependence on the properties of the "*particulate materials*" and the *"mixed precursor*", the strength of the *"carbonated article"* depends both on the properties of the "*shaped precursor*" mentioned in step 2 and on the *"carbonation process"* described in this step.

The carbonation process according to the invention is based on the fact that by exposing the mixed precursor to a high pressure of CO₂ at elevated temperatures, the high pressure CO₂ dissolves in the water to form carbonate or bicarbonate ions. These ions react with the transition and/or post-transition metal (e.g. iron/zinc or ionized or hydrated iron/zinc) and form the metal carbonate. Since the particles of transition and/or post-transition metal, the powder and/or fibres, are in contact during the formation of this iron carbonate, a network is formed connecting the transition and/or post-transition metallic particles through these carbonates. This network is what gives strength to final product.

In this document, the term *"carbonation process"* will be used to define the accelerated or artificial carbonation of the "*shaped precursor*" prepared in step 1. The duration of this process is calculated as the time during which the sample is placed under the stipulated *"controlled environment'* and *"controlled parameters".*

The *"carbonation process"* should act on the "*shaped precursor*" in such a way that the granules react with CO₂ in a *"controlled environment'* leading to the formation of carbonates which links these granules together to form a cohering article. This is the *"carbonated article"* further specified herein below. The strength of the *"carbonated article"* is attributed to the carbonates formed at the contact points between the granules.

The *"carbonation process"* is undertaken under a "*controlled environment*" of a *"carbonation chamber*" isolated from the surrounding uncontrolled environment. In this *"controlled environment',* the "*shaped precursor*" is brought in close contact with the atmosphere rich in CO₂ to allow the carbonation reaction. This controlled environment could either be maintained using a closed reactor with enough CO₂ to support the entire reaction, or a flow reactor with a continuous inflow of CO₂. The term *"carbonation chamber"* would from now on refer to this isolated *"controlled environment'* where the "*control parameters*" can be supervised.

The *"carbonation process"* undertaken in a *"carbonation chamber*" also includes the supervision of the *"controlled parameters".* The *"controlled parameters"* advantageously involve one or a combination of the following:

The availability of moisture in the *"carbonation chamber*". This moisture could be provided as steam, or by heating the water separately inside the *"carbonation chamber*", or by decomposition of a hydrate, or by release of physically bound water, or by any other chemical reaction leading to a release of moisture. This moisture could also compensate, partially or fully, for the "aqueous source" mentioned in step 1 of this document. In the preferred form of this invention, the "*controlled environment*" inside the *"carbonation chamber"* is 100% saturated by placing a small water source during the preheating of the *"carbonation chamber*" as well as during the *"carbonation process"* itself.

The control of temperature inside the *"controlled environment'.* The temperature can be controlled by various means. Most preferably by electric heating of the *"carbonation chamber*". The *"carbonation chamber*" may or may not be preheated to a desired temperature before the *"carbonation process"* starts. The temperature could be kept stable during the *"carbonation process"* or could be varied cyclically or randomly. In the preferred form of this invention, the *"carbonation chamber"* was preheated to the desired temperature and the *"carbonation process"* was performed at a constant temperature. This temperature could vary between 10°C and 150°C; preferably from 30°C to 120°C; most preferably between 50°C to 80°C.

The control of pressure during the *"carbonation process".* Per reference to the examples hereinafter, the pressure inside the *"carbonation chamber*" could be anything above 1 bar, and appears to correlate with the compressive strength of the carbonated article levelling off at pressures of about 20 bar and above. The pressure is most preferably increased by inflow of a gas or a mix of gas inside the *"carbonation chamber*". If only a single gas is allowed inside the gas chamber, it is advantageously CO₂. If a mix of gases is allowed inside the "*carbonation chamber*", CO₂ is advantageously one of the components of the *"carbonation chamber*". The carbonation reaction is advantageously performed at a pressure of 50 bar or less, advantageously 40 bar or less, advantageously 30 bar or less, advantageously 20 bar or less.

The control of the CO₂ availability during the reaction. The CO₂ may be supplied in its pure form, from the exhaust gas of an industrial plant, or from flue gas. The availability of CO₂ must be maintained in such a way that the strength of the *"carbonated article"* should be at least twice of the strength of an identical "*shaped precursor*" kept in a N₂ atmosphere with similar *"control parameters"* except the availability of CO₂. The preferred approach would be to rinse the *"carbonation chamber"* with the inlet gas to remove the existing gas inside.

The duration for which the *"carbonation process"* is allowed was found to be a useful determinant. The duration during which the *"controlled parameters"* and *"controlled environment'* are maintained, is a useful determinant in the quality of the "carbonated article". The carbonation reaction is advantageously performed for at least 15 minutes, preferably at least 1 hour, preferably at least 2 hours, most preferably at least 4 hours. It could be continued for as long as 48 hours, more preferably at most 24 hours, more preferably 16 hours or less.

The mixed precursor in aspects of the present invention advantageously is substantially free from materials having hydraulic binding properties. A material having hydraulic binding properties can be a hydraulic binder or latent hydraulic binder or pozzolanic material. A hydraulic binder, latent hydraulic binder or pozzolanic material refers to a broad class of siliceous or siliceous and aluminous materials which, in themselves, possess little or no cementitious value but which will, in finely divided form and in the presence of water, react chemically by hydration of earth alkaline metal ions, such as calcium at ordinary temperature to form compounds possessing cementitious properties. In the present invention the mixed precursor material is substantially free from such hydraulic binders and the binding comes from the transition and/or post-transition metal-carbonates which are being formed, in particular the FeCOs and the ZnCOs. This results in the carbonate bonded article to be mainly bonded by the carbonates formed during the carbonation process according to aspects described hereinabove.

The article is preferably not a cement-based article. This can be tested by subjecting an identical shaped precursor to a treatment step in a nitrogen atmosphere which does not contain CO₂, wherein other conditions are same as in the reacting step for producing the carbonate bonded article. The compressive strength of the carbonated article shall be more than a factor 2, preferably at least a factor 3 and possibly at least a factor 5 higher than the compressive strength of the compact treated with nitrogen (Tests performed after 28 days of aging subsequent to the reacting step, according to Belgian standard NBN B15-220). A calcium silicate hydrate phase can refer to amorphous calcium silicate hydrates (e.g. 3CaO.2SiO₂.3H₂O). It can refer to crystalline calcium silicate hydrates, such as tobermorite, as well.

In one aspect, the present invention is directed to a carbonation process, said process comprising;
Mixing a source of transition and/or post-transition metal, in particular iron or zinc, preferably particulate metallic iron or zinc, more preferably granular metallic iron or zinc with preferably a D₅₀ smaller than or equal to 1 mm; with
an aqueous source, most preferably liquid water in a liquid to solid ratio below 0.5 to achieve a 'mixed precursor'; and
exposing said mixed precursor to a source of carbonate ions, most preferably CO₂ gas at a pressure of at least 1 bar to yield a carbonated article.

The carbonation step is preferably of a pressure of at least 1 bar at an elevated temperature, in particular of at least 30°C; preferably from about 30°C up to about 150°C; more preferably from about 30°C up to about 120°C, more preferably from about 50°C to about 80°C. Advantageously, the process is done at a pressure of at least 5 bar and a temperature of at least 30°C; in particular from about 30°C up to about 150°C; more preferably from about 50°C up to about 120°C, more preferably from about 50°C to about 80°C. Advantageously, the process is done at a pressure of about 20 bar and a temperature of at least 30°C; in particular from about 30°C up to about 150°C; more preferably from about 50°C up to about 120°C; , more preferably from about 50°C to about 80°C.

The source of iron (and zinc) could also be any of its alkaline salt or solution, for instance as hydroxides or silicates etc (Fe(OH)₂, Fe₂SiO₄, Zn(OH)₂, Zn₂SiO₄). Alkaline here advantageously refers to anything with a pH of 5 or more at the given temperature and pressure condition.

The carbonated article according to aspects of the present invention, is advantageously obtainable using the process according to the invention. The article is characterized in the combination of the following features:
- the transition and/or post-transition metal carbonates constitute at least 5% of the weight of the final product;
- that the amount transition and/or post-transition metal oxides preferably constitute less than 10%, more preferably less than 5%, and most preferably less than 2% of the total weight;
- the main constituents of the carbonated article include the unreacted starting "granular transition and/or post-transition metal material" and the carbonated reaction product; and
- said final product has a compressive strength of at least 40 MPa, more preferably at least 45 MPa.

It will be convenient to note that using the process of the instant invention, the transition and/or post-transition metal carbonates act as a binder in the final product. As explained above, the carbonate or bicarbonate ions react with the transition and/or post-transition metal particles to form a network connecting the transition and/or post-transition metallic particles and giving strength to the final carbonated product. Expressed differently, in this process the transition and/or post-transition metal carbonation does not merely act as a coating but as a structural binder instead.

The *"carbonated article"* can be used for many purposes including for building blocks, or for production of transition metal carbonate-metal based articles, or as compacts in recycling of steel dust, and sand blasting waste.

### Examples

### Example 1: Particle size of metal source

The effect of particle size on the efficiency of the "carbonation process" was evaluated. In this example, two samples were prepared. In sample 1, the iron particles with median particle size of 10 microns was mixed with water at liquid to solid (l/s) ratio of 0.125 and in sample 2, iron particles passing 200# mesh (median size below 74 µm) were mixed with water at liquid to solid (l/s) ratio of 0.0625 respectively. The mixed precursor was shaped by pressing the mixed precursor at 150 kg/cm2 for 10 seconds into pellets of 23mm diameter and 20 grams in weight. The average compressive strength were respectively found to be 134 MPa and 57.6 MPa at 16 hours of carbonation at 60C and 20 bar CO₂ pressure. In another experiment metallic granulated zinc was studied for its carbonation properties. Granulated zinc powder was mixed with inert slag at a 1:3 weight ratio and with water at l/s of 0.075 and prepared in the form of "pressed pellet" to be tested similar to that in examples above. The average compressive strength was found to reach as high as 38 MPa. This example shows that granulated Zn powder also has the ability to form the "carbonated article". Both these samples were prepared with the same "controlled environment" and "controlled parameters". It follows from these experiments that any (iron or zinc) granulated metallic powder can be used in the carbonation process of the present invention. For the granulated metal source advantageously the D₅₀ is less than or equal to 1 mm, preferably less than or equal to 500 µm, preferably less than or equal to 250 µm, preferably less than or equal to 100 µm.

In the following examples, a mixed precursor according to sample 1 was used. The mixed precursor was shaped by pressing the mixed precursor at 150 kg/cm2 for 10 seconds into pellets of 23mm diameter and 20 grams in weight.

### Example 2: Liquid to solid ratio (l/s)

Experiments were carried out to test whether water could be a limiting reagent in this system. This was tested by varying the liquid to solid ratio. The aqueous source may be a limiting reagent in the system. In example 2, a comparison of liquid to solid ratio (l/s) to determine the moisture content of the *"mixed precursor"* was performed and the resulting observation are given in Table 1. The mixed precursor of sample 1 of example 1 was used. An increase in l/s ratio was observed to increase the compressive strength of the samples. However, under each of the tested conditions with a l/s in the range of 0.05 to 0.125 a carbonated product was formed. It is apparently sufficient that the mixture is maintaining its shape but does in itself not require any mechanical strength.

**Table 1: Effect of change in liquid to solid ratio**

| l/s | Temperature (°C) | CO₂ Pressure (Bar) | Duration (Hours) | Compressive Strength (MPa) |
|---|---|---|---|---|
| 0.05 | 60 | 20 | 4 | 33 |
| 0.075 | 60 | 20 | 4 | 29 |
| 0.125 | 60 | 20 | 4 | 120 |
| 0.075 | 60 | 5 | 4 | 35 |
| 0.125 | 60 | 5 | 4 | 89 |

### Example 3: Effect of temperature

Where the foregoing parameters are related to the first step, i.e. the preparation of the shaped precursor, other variables are related to the second step, i.e. the carbonation process. In the conducted experiments, the shaped precursor is placed inside a carbonation chamber which is preheated and rinsed with pure CO₂ before the experiments are initiated. In all of the experiments the atmosphere inside the "carbonation chamber" was moisture saturated. During the carbonation process, it was found sufficient to moisturize the particulate transition or post-transition metal source during the carbonation procedure. Consequently the liquid to solid ratio is below 0.5; preferably below 0.2.

The temperature in the environment inside the "*carbonation chamber*" was maintained using a heating jacket and was observed using a thermocouple.

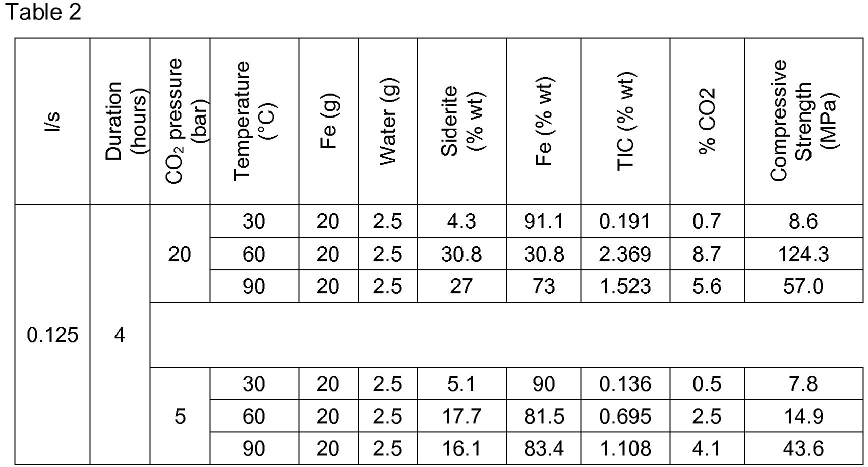

It can be seen from the experiments in Table 2 that temperature has an effect on the resulting product even if everything else in the process is maintained at a constant level. It is quite obvious from these experiments that there is no proper carbonation at 30°C even at a CO₂ pressure of 20 bar compared to the most preferred conditions described in the proposed method. It can further be seen from these experiments that there is an interplay between the CO₂ pressure and temperature where a high pressure (starting at 20 bar) has an apparent optimum at 60°C, where at a CO₂ pressure of 5 bar, a higher conversion and compressive strength are achieved at 90°C.

To test the effect of pressure even further, in an additional experiment the impact of pressure and purity were also evaluated. There is an interplay between pressure and temperature wherein combination of pressure starting at 1 bar and temperatures from room temperature to 150°C.

### Example 4: Effect of Pressure and purity

**Table 3**

| Temperature | l/s | Duration (hours) | CO₂ Pressure (bar) | Siderite (%) | TIC | % CO₂ | Compressive Strength (MPa) |
|---|---|---|---|---|---|---|---|
| 60°C | 0.125 | 4 | 5 | 14.2 | 0.695 | 2.5 | 14.5 |
| | | | 20 | 30.9 | 2.369 | 8.7 | 121.7 |
| | | | | | | | |
| | | | | | | | |
| | | 16 | 1 | | | | 13.8 |
| | | | 20 | 40.8 | 2.282 | 8.4 | 134.0 |
| | | | 30 | 44.6 | 2.552 | 9.4 | 143.0 |

It can be seen from the experiments of Table 3 that increase in CO₂ pressure leads to increase in the degree and the rate of reaction (TIC and XRD-Rietveld results) as well as compressive strength. Pressure is hence a parameter allowing to increase the process efficiency. The process becomes much more efficient in terms of compressive strength as well as in terms of degree and rate of reaction as the pressure is increased. Another consideration is the reduction in the variability of the results.

The purity of CO₂ was also found to have an effect. A mix of gas containing 30% CO₂ and 70% N₂ was tested at 20 bar pressure and 60°C for 4 hours. The average compressive strength was found to have decreased from around 121 MPa (with 100% CO₂) to around 13 MPa (with 30% CO₂).

### Example 5: Effect of Duration

**Table 4**

| Temperature (°C) | l/s | Pressure (bar) | Duration (hours) | Siderite (% wt) | TIC (% wt) | CO₂ (%) | Compressive Strength (MPa) |
|---|---|---|---|---|---|---|---|
| 60 | 0.125 | 20 | 2 | 26.8 | 2.1 | 7.7 | 76.5 |
| | | | 4 | 30.9 | 2.4 | 8.7 | 127.7 |
| | | | 16 | 40.8 | 2.3 | 8.4 | 134.2 |

The mixed precursor of sample 1 of example 1 was used. The duration of the reaction was found to be a parameter influencing the reaction up to a certain extent in the proposed system. As already mentioned hereinbefore, processes according to aspects of the present invention allow differentiating over the art by reduced process durations to obtain comparable levels of compressive strength. The most preferred duration for curing in US 8366820 is 5 to 7 days. Even the least preferred duration is 1 day and more. Conversely, process according to the present invention are much faster. At the condition proposed in Table 4, the strength is already saturated in 4 hours.

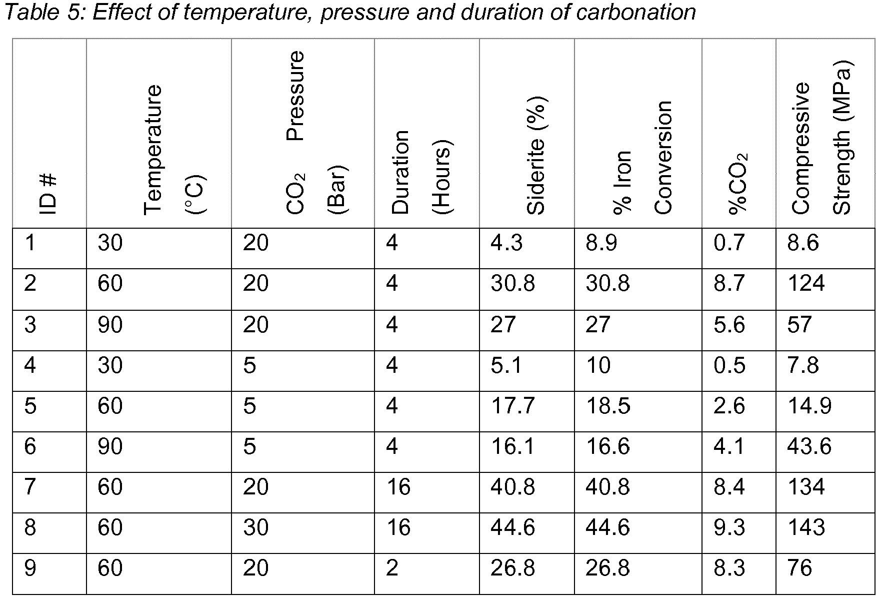

As can be observed from Table 5, average strength of up to 143 MPa was observed in one of the evaluated conditions. However, one of the main novelties of the proposed process is that a strength as high as 76 MPa can be observed within 2 hours of the carbonation process without any pre or post processing time. The representative parameter already shows saturation within 4 hours giving a strength as high as 124 MPa.

The % siderite formation and the % conversion of iron were evaluated using XRD-Rietveld analysis. For the XRD observations, the ground samples were back loaded in the sample holder within 4 to 16 hours of grinding. The XRD analysis was performed using a Cobalt-kα source between 2θ values of 5 and 120 at a step of 0.013 in ambient conditions. *Table* 5 shows that as much as 44% siderite can be formed in the system given in this example based on the Rietveld analysis performed using PANalytical Highscore plus software. It also shows that the siderite content and Average MPa do not appear to be increasing proportionally at higher values of siderite content.

Simultaneous observation of % siderite content and % iron conversion in *Table* 5 also shows that siderite and iron are the only two main products present in most of the samples prepared by grinding the corresponding *"carbonated articles".* This makes the proposed process a completely carbonation based process as opposed to most of the other processes discussed in the prior art containing both oxides and carbonates.

The % CO₂ content in *Table* 5 was evaluated using the formula TIC* *(Molar mass of CO₂* /*molar mass of Carbon*). The total inorganic content (TIC) was performed with the assistance of 30% orthophosphoric acid on the same powder samples which were prepared for the XRD analysis. This analysis was performed within 2 weeks of the preparation of the sample. The samples were kept inside a sealed bag during the period. The high conversion rates nicely correlate with a high CO₂ content in the carbonated articles.

### Example 6: Effect of presence of additives

Inert filler materials can be added to the transition and/or post-transition metal ions in the formation of the shaped precursor. It follows from the below experiments that while silica is claimed to be an essential constituent for the Fe-carbonation in the processes in the state-of-the art, it has a dramatic impact on the compressive strength of the carbonated materials.

### 1. Inhibition/incompatibility with silica-rich materials

Chemically prepared fumed silica was found to have highly negative effect on the compressive strength of the samples. A 1% replacement (by weight) of metallic iron powder by fumed silica led to decrease in compressive strength from around 110 MPa (in case of no fumed silica) to 40 MPa.

Class F fly ash was used as a silica-rich material (70 wt.% SiO₂) in US 8366820, and was also tested for compatibility or potential positive effects on strength development in the proposed invention. The result show that use of class F fly ash also had a negative effect on the compressive strength of the samples. A 40% replacement with class F fly ash was found to decrease the compressive strength drastically from above 100 MPa to less than 5 MPa in similar conditions.

Finely ground quartz sample was also tested for its compatibility as enhancer of carbonation based strength development. It was found that at 40% replacement of iron with quartz, the compressive strength had already dropped to an average of around 3.5 MPa.

### 2. Filling (neutral) effect of other additives

Finely ground CaCOs, on the other hand, showed a good potential to be used as filler. A 40% replacement of iron with CaCOs gave a strength of around 30 MPa in 4 hours of carbonation.

Finely ground copper slag rich is fayalite was also found to have properties suitable to be used as filler. In fact, a replacement of 75% of iron with fayalite (with <2% chloride content) was found to give a compressive strength of upto 25 MPa in 8 hours and 39 MPa in 64 hours. Even a 87.5% replacement of iron with this fayalite slag gave a compressive strength of up to 19 MPa.

In processes according to aspects of the present invention, the mixed precursor can be shaped with the inclusion of further advantageously inert additives, e.g. in an amount up to 50% by weight, but clearly excluding silica sources like silica fume, quartz or class F fly ash having in excess of 30% SiO₂. Additives having 30% or less SiO₂, advantageously 20% or less SiO₂, advantageously 10% or less SiO₂, such as fayalite slag may be added to replace the metal granules. Such additives can be present in an amount up to 80% of the total weight; more preferably up to 50%.

### Product Characterization

In a further aspect, the present invention is directed to a carbonate bonded article ("carbonated article") which is advantageously produced by the process described hereinabove. The strength of this carbonated article is attributed to the transition or post-transition metal (e.g. iron and/or zinc) carbonates formed by the process. These transition or post-transition metal carbonates must constitute at least 0.5% of the weight of the final product, in particular at least 5% of the weight of the final product, and advantageously form at the precursor article surface to obtain suitable performing "carbonated products". These transition or post-transition metal carbonates in the carbonated article advantageously are the major reaction product. However, additives like limestone, slags, ashes or inert wastes may be added to replace the transition or post-transition metal granules up to a certain extent. This replacement should be less than 80% - most preferably <50%.

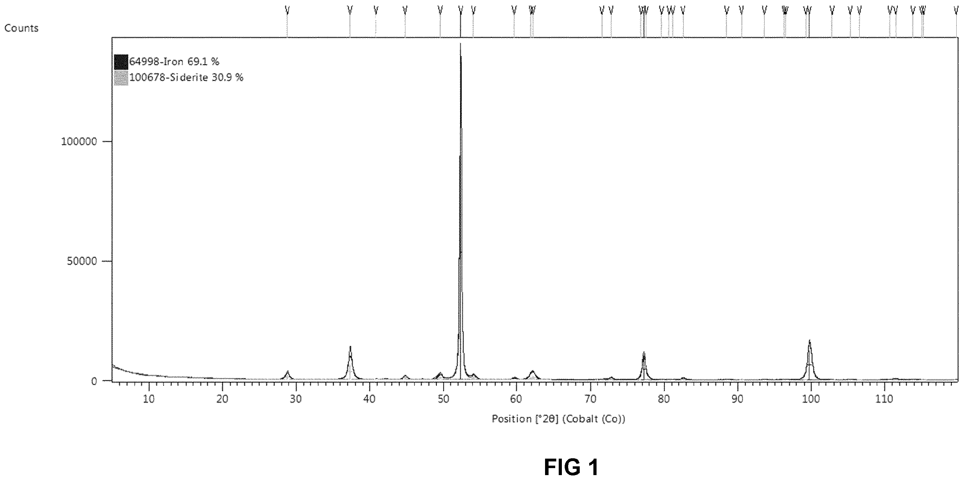

It has been observed, and as evident from the XRD-Rietveld analysis of the obtained materials, that using the process according to the invention, the main constituents of the carbonated article include the unreacted starting "transition or post-transition metal material" and the carbonated reaction product, wherein the amount of transition or post-transition metal oxides is advantageously 10% or less of the weight of the *"carbonated article".* The amount of additional oxides formed during the process should be preferably less than 10%, more preferably less than 5%, and most preferably less than 2% of the total weight of the *"carbonated article".* The degree of oxide formation could even be lower than 1% of the weight of the "carbonated article". As can be seen from FIG. 1, the product obtained from a mixed precursor of sample 1 of example 1 and then carbonated for 4 hours at 60°C and 20 bar CO₂ pressure contains only the unreacted starting material and FeCOs in the form of mineral siderite.

Still, and notwithstanding the fact that the transition or post-transition metal carbonates can be as low as 0.5% of the weight of the final product, said final product was found to have a compressive strength of at least 5 MPa, preferably at least 15 MPa, more preferably at least 30 MPa, and most preferably at least 45 MPa.

### Example 7: Detailed study at l/s ratio of 0.115

The mixed precursor in this example was prepared by mixing 10 µm Fe particles with water at the l/s of 0.115 in accordance with the examples above. In the tables hereafter we provide the different parameters tested for the carbonated products thus obtained.

Table 6 shows the compressive strengths of the sample carbonated at l/s of 0.115 for 4 hours at different combinations of CO₂-pressure and temperature. Table 7 shows the specific pore volumes of the corresponding samples. Table 8 shows the corresponding siderite contents.

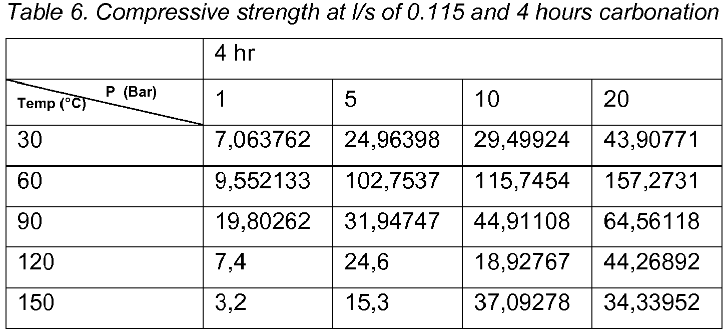

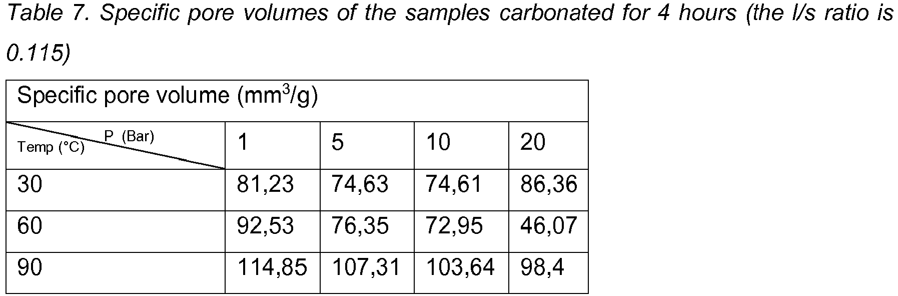

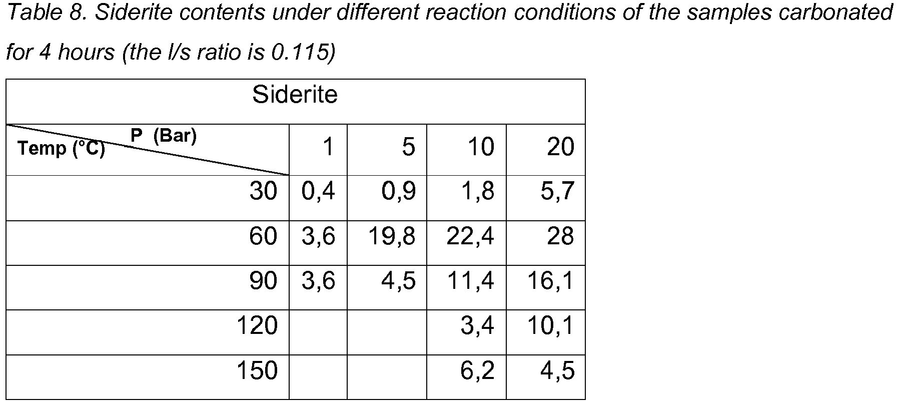

### Example 8: Testing of other Transition / Post Transition Metals

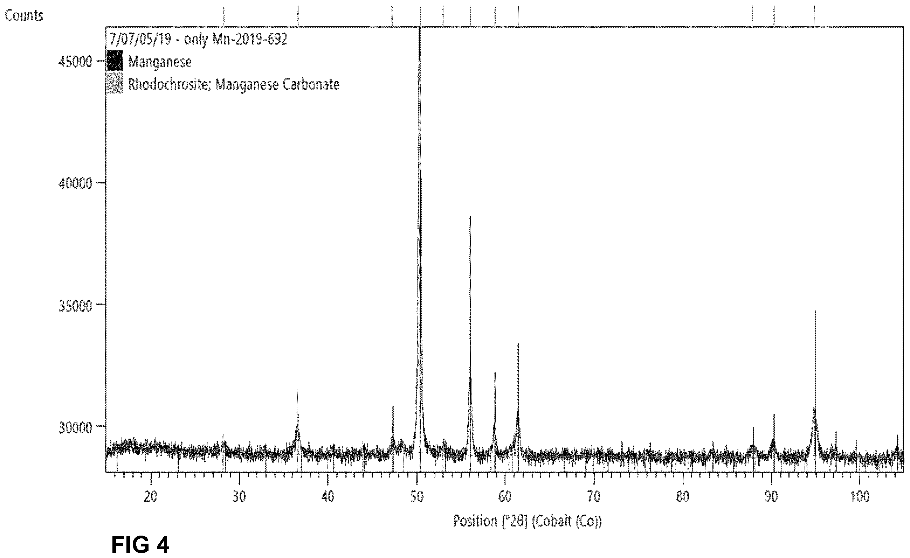

As a further example of a transition metal Manganese was tested in the carbonation process of the present invention. In this example, Manganese metal powder was mixed with water at the l/s ratio of 0.122 and the wet powdered mix was pressed in the form of pellets using the process described earlier. Even in an un-optimized process, a compressive strength of about 11.2 MPa was observed in this system. The formation of Rhodochrosite (Manganese carbonate mineral of calcite family) can be observed to have formed from XRD image in Figure 4.

In another sample, Manganese metal powder was mixed with water at l/s ratio of 0.089 and the wet powder was subsequently pressed using the same process as described in all the examples of this patent. In conjunction with what has previously been demonstrated, even with these lower l/s ratio the compressive strength of this system was found to be 18 MPa.

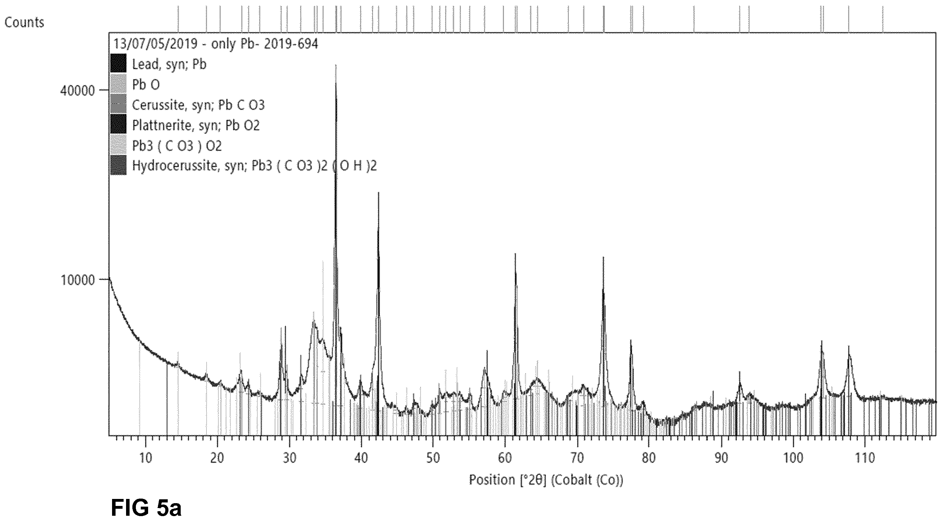

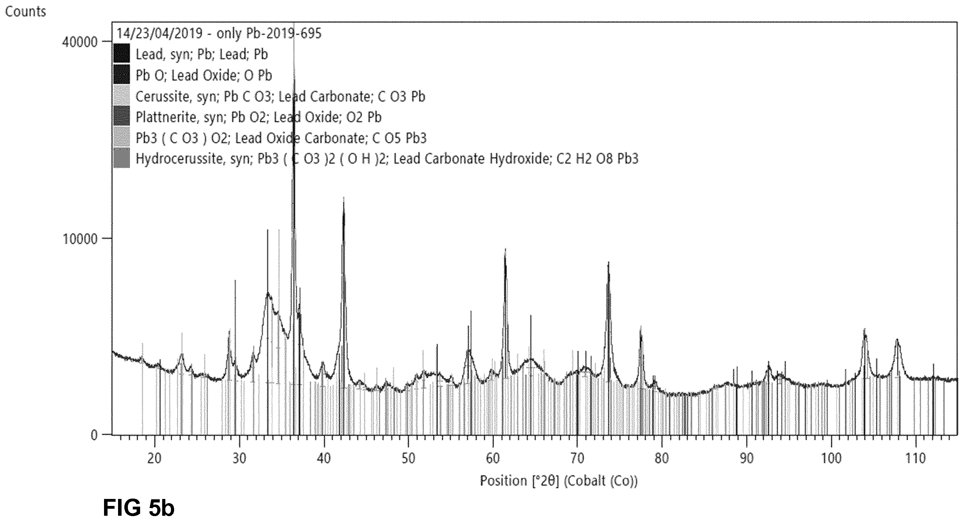

As a further example of a post transition metal lead was tested in the carbonation process of the present invention. In this example, Lead metal powder was mixed with water at an l/s ratio of 0.06 and pressed in the form of pellet as described earlier. The compressive strength of such pellets was found to be 28 MPa. The formation of different carbonates was identified using XRD as shown in Figure 5a. Formation of cerussite (PbCO3 mineral of aragonite group) can also be observed from this figure. Also here a lower l/s ratio of 0.05 still produced carbonated articles as can be seen in the XRD of Figure 5b with a compressive strength of 20 MPa.

## Claims

1. Method of producing a carbonate bonded article, comprising:
preparing a mixed precursor comprising a particulate metal source comprising one or more metals and an aqueous source,
shaping the mixed precursor to obtain a shaped precursor, and
reacting the shaped precursor with carbon dioxide, wherein the carbon dioxide reacts with the aqueous source to form carbonate or bicarbonate ions and the one or more metals react with the carbonate or bicarbonate ions and form carbonates of the one or more metals thus transforming the shaped precursor into the carbonate bonded article,
wherein
the one or more metals are transition and/or post-transition metals,
the particulate metal source comprises at least 30% of the one or more metals by dry weight, preferably at least 40% by dry weight, preferably at least 50% by dry weight, preferably at least 60% by dry weight, preferably at least 75% by dry weight, and
the mixed precursor is free from silica or comprises at most 30% by dry weight of silica, preferably at most 20% by dry weight, preferably at most 10% by dry weight, preferably at most 5% by dry weight,
**characterized in that** the mixed precursor is substantially free of materials having hydraulic binding properties, and
**in that** the step of reacting the shaped precursor with carbon dioxide takes place at a temperature of at least 30°C and a pressure of at least 5 bar.

2. Method of claim 1, wherein the particulate metal source has a particle size distribution with 50 percentile particle size being smaller than or equal to 1 mm, preferably smaller than or equal to 500 µm, preferably smaller than or equal to 250 µm, preferably smaller than or equal to 100 µm.

3. Method of claim 1 or 2, wherein the one or more metals are selected from the group consisting of: Mn, Fe, Co, Ni, Cu, Zn, Cd, and Pb, preferably the one or more metals are selected from the group consisting of iron and zinc.

4. Method of claim 3, wherein the particulate metal source comprises or consists of one or more of: metallic iron, metallic zinc, an alkaline salt of the one or more metals, a solution of the one or more metals having a pH of at least 3.5, a hydroxide of the one or more metals, and a silicate of the one or more metals.

5. Method of any one of the preceding claims, wherein the aqueous source is water, and wherein the water is added to the particulate metal source at a liquid to solid ratio of 0.5 or less.

6. Method of any one of the preceding claims, wherein the mixed precursor is free from silica or comprises at most 9% by dry weight of silica, preferably at most 5% by dry weight, preferably at most 1% by dry weight.

7. Method of any one of the preceding claims, wherein the source of carbonate or bicarbonate ions comprises a gas comprising at least 15% by volume carbon dioxide, preferably at least 30% by volume carbon dioxide, the gas being introduced in the reaction environment.

8. Method of any one of the preceding claims, wherein the reaction environment is saturated with water vapour.

9. Method of any one of the preceding claims, wherein in the reacting step at least 5% by weight of carbonates of the one or more metals are formed such that the carbonate bonded article has a compressive strength being at least two times the strength of a same shaped precursor article treated in a nitrogen atmosphere free of carbon dioxide under same conditions as in the reacting step.

10. Method of any one of the preceding claims, wherein the reacting step in the reaction environment is carried out for a duration between 15 minutes and 20 hours, preferably between 1 hour and 16 hours, preferably between 30 minutes and 2 hours.

11. A carbonate bonded article, comprising at least 5% by weight of carbonates of one or more transition and/or post-transition metals, wherein the carbonates act as a binder, wherein the carbonate bonded article has a compressive strength of at least 40 MPa, preferably at least 45 MPa, preferably at least 50 MPa, wherein the carbonate bonded article is obtainable by the method of any one of the claims 1 to 10, wherein at least 5% by weight of carbonates of the one or more transition and/or post-transition metals are formed such that the carbonate bonded article has a compressive strength being at least two times the strength of a shaped precursor article treated in a nitrogen atmosphere free of carbon dioxide under same conditions as in the reacting step.

12. The carbonate bonded article according to claim 11, comprising at least 0.5% by weight siderite and/or smithsonite, preferably at least 1%, preferably at least 5%, preferably at least 10% by weight, preferably at least 15% by weight, preferably at least 20% by weight.

13. The carbonate bonded article of claim 11 or 12, wherein the carbonate bonded article is free of transition and/or post-transition metal oxides, or comprises 10% or less by weight transition and/or post-transition metal oxides, preferably less than 5% or less by weight, preferably 2% or less by weight.

14. The carbonate bonded article according to any one of the claims 11 to 13, wherein the one or more transition and/or post-transition metals are selected from the group consisting of: Mn, Fe, Co, Ni, Cu, Zn, Cd, and Pb.

15. The carbonate bonded article according to claim 14, wherein the one or more transition and/or post-transition metals are Fe and/or Zn.

## Patentansprüche

1. Verfahren zur Herstellung eines Carbonat-gebundenen Gegenstands, umfassend:
Herstellen eines gemischten Vorläufers, umfassend eine Partikelmetallquelle, die ein oder mehrere Metalle umfasst, und eine wässrige Quelle,
Formen des gemischten Vorläufers, um einen geformten Vorläufer zu erhalten, und
Umsetzen des geformten Vorläufers mit Kohlendioxid, wobei das Kohlendioxid mit der wässrigen Quelle reagiert, um Carbonat- oder Bicarbonat-Ionen zu bilden, und das eine oder die mehreren Metalle mit den Carbonat- oder Bicarbonat-Ionen reagieren und Carbonate des einen oder der mehreren Metalle bilden, wodurch der geformte Vorläufer in den Carbonat-gebundenen Gegenstand umgewandelt wird, wobei
das eine oder die mehreren Metalle Übergangsmetalle und/oder Post-Übergangsmetalle sind,
die Partikelmetallquelle mindestens 30 % des einen oder der mehreren Metalle bezogen auf das Trockengewicht, vorzugsweise mindestens 40 % bezogen auf das Trockengewicht, vorzugsweise mindestens 50 % bezogen auf das Trockengewicht, vorzugsweise mindestens 60 % bezogen auf das Trockengewicht, vorzugsweise mindestens 75 % bezogen auf das Trockengewicht umfasst,
und
der gemischte Vorläufer frei von Silica ist oder höchstens 30 % Silica bezogen auf das Trockengewicht, vorzugsweise höchstens 20 % Silica bezogen auf das Trockengewicht, vorzugsweise höchstens 10 % Silica bezogen auf das Trockengewicht, vorzugsweise höchstens 5 % Silica bezogen auf das Trockengewicht umfasst,
**dadurch gekennzeichnet, dass**
der gemischte Vorläufer im Wesentlichen frei von Materialien mit hydraulischen Bindungseigenschaften ist, und
dadurch, dass der Schritt des Umsetzens des geformten Vorläufers mit Kohlendioxid bei einer Temperatur von mindestens 30 °C und einem Druck von mindestens 5 bar stattfindet.

2. Verfahren nach Anspruch 1, wobei die Partikelmetallquelle eine Partikelgrößenverteilung aufweist mit 50-%-Quantil der Partikelgröße kleiner als oder gleich 1 mm, vorzugsweise kleiner als oder gleich 500 µm, vorzugsweise kleiner als oder gleich 250 µm, vorzugsweise kleiner als oder gleich 100 µm ist.

3. Verfahren nach Anspruch 1 oder 2, wobei das eine oder die mehreren Metalle ausgewählt werden aus der Gruppe bestehend aus: Mn, Fe, Co, Ni, Cu, Zn, Cd und Pb, wobei vorzugsweise das eine oder die mehreren Metalle aus der Gruppe bestehend aus Eisen und Zink ausgewählt werden.

4. Verfahren nach Anspruch 3, wobei die Partikelmetallquelle eines oder mehreres von metallischem Eisen, metallischem Zink, einem alkalischen Salz des einen oder der mehreren Metalle, einer Lösung des einen oder der mehreren Metalle mit einem pH von mindestens 3,5, einem Hydroxid des einen oder der mehreren Metalle und einem Silicat des einen oder der mehreren Metalle umfasst oder daraus besteht.

5. Verfahren nach irgendeinem der vorhergehenden Ansprüche, wobei die wässrige Quelle Wasser ist, und wobei das Wasser der Partikelmetallquelle in einem Flüssigkeits-Feststoff-Verhältnis von 0,5 oder weniger zugegeben wird.

6. Verfahren nach irgendeinem der vorhergehenden Ansprüche, wobei der gemischte Vorläufer frei von Silica ist oder höchstens 9 % Silica bezogen auf das Trockengewicht, vorzugsweise höchstens 5 % Silica bezogen auf das Trockengewicht, vorzugsweise höchstens 1 % Silica bezogen auf das Trockengewicht umfasst.

7. Verfahren nach irgendeinem der vorhergehenden Ansprüche, wobei die Quelle von Carbonat- oder Bicarbonat-Ionen ein Gas umfasst, das mindestens 15 Vol.% Kohlendioxid, vorzugsweise mindestens 30 Vol.% Kohlendioxid umfasst, wobei das Gas in die Reaktionsumgebung eingeführt wird.

8. Verfahren nach irgendeinem der vorhergehenden Ansprüche, wobei die Reaktionsumgebung mit Wasserdampf gesättigt wird.

9. Verfahren nach irgendeinem der vorhergehenden Ansprüche, wobei im Reaktionsschritt mindestens 5 Gew.% Carbonate des einen oder der mehreren Metalle gebildet werden, derart dass der Carbonat-gebundene Gegenstand eine Druckfestigkeit aufweist, die mindestens das Zweifache der Festigkeit eines gleichen geformten Vorläufergegenstands, der unter den gleichen Bedingungen wie im Reaktionsschritt in einer von Kohlendioxid freier Stickstoffatmosphäre behandelt wird , beträgt.

10. Verfahren nach irgendeinem der vorhergehenden Ansprüche, wobei der Reaktionsschritt in der Reaktionsumgebung für eine Dauer zwischen 15 Minuten und 20 Stunden, vorzugsweise zwischen 1 Stunde und 16 Stunden, vorzugsweise zwischen 30 Minuten und 2 Stunden ausgeführt wird.

11. Ein Carbonat-gebundener Gegenstand, umfassend mindestens 5 Gew.% Carbonate eines oder mehrerer Übergangsmetalle und/oder eines oder mehrerer Post-Übergangsmetalle, wobei die Carbonate als Bindemittel fungieren, wobei der Carbonat-gebundene Gegenstand eine Druckfestigkeit von mindestens 40 MPa, vorzugsweise mindestens 45 MPa, vorzugsweise mindestens 50 MPa aufweist, wobei der Carbonat-gebundene Gegenstand durch das Verfahren nach irgendeinem der Ansprüche 1 bis 10 erhalten werden kann, wobei mindestens 5 Gew.% Carbonate des einen oder der mehreren Übergangsmetalle und/oder des einen oder der mehreren Post-Übergangsmetalle eine Druckfestigkeit aufweisen, die mindestens das Zweifache der Festigkeit eines geformten Vorläufergegenstands, der unter den gleichen Bedingungen wie im Reaktionsschritt in einer von Kohlendioxid freier Stickstoffatmosphäre behandelt wird, beträgt.

12. Der Carbonat-gebundene Gegenstand nach Anspruch 11, umfassend mindestens 0,5 Gew.%, vorzugsweise mindestens 1 Gew.%, vorzugsweise mindestens 5 Gew.%, vorzugsweise mindestens 10 Gew.%, vorzugsweise mindestens 15 Gew.% vorzugsweise mindestens 20 Gew.% Siderit und/oder Smithsonit.

13. Der Carbonat-gebundene Gegenstand nach Anspruch 11 oder 12, wobei der Carbonat-gebundene Gegenstand frei von Übergangsmetalloxiden und/oder Post-Übergangsmetalloxiden ist oder 10 Gew.% oder weniger, vorzugsweise 5 Gew.% oder weniger, vorzugsweise 2 % oder weniger Übergangsmetalloxide und/oder Post-Übergangsmetalloxide umfasst.

14. Der Carbonat-gebundene Gegenstand nach irgendeinem der Ansprüche 11 bis 13, wobei das eine oder die mehreren Übergangsmetalle und/oder das eine oder die mehreren Post-Übergangsmetalle ausgewählt sind aus der Gruppe bestehend aus: Mn, Fe, Co, Ni, Cu, Zn, Cd und Pb.

15. Der Carbonat-gebundene Gegenstand nach Anspruch 14, wobei das eine oder die mehreren Übergangsmetalle und/oder das eine oder die mehreren Post-Übergangsmetalle Fe und/oder Zn sind.

## Revendications

1. Procédé de production d'un article lié par du carbonate, comprenant :
la préparation d'un précurseur mélangé comprenant une source métallique particulaire comprenant un ou plusieurs métaux et une source aqueuse,
le façonnage du précurseur mélangé pour obtenir un précurseur façonné, et
la mise en réaction du précurseur façonné avec du dioxyde de carbone, le dioxyde de carbone réagissant avec la source aqueuse pour former des ions carbonate ou bicarbonate et le ou les métaux réagissant avec les ions carbonate ou bicarbonate et formant des carbonates du ou des métaux, transformant ainsi le précurseur façonné en l'article lié par du carbonate,
dans lequel
le ou les métaux sont des métaux de transition et/ou de post-transition,
la source métallique particulaire comprend au moins 30 % du ou des métaux en poids sec, de préférence au moins 40 % en poids sec, de préférence au moins 50 % en poids sec en poids, de préférence au moins 60 % en poids sec, de préférence au moins 75 % en poids sec, et
le précurseur mélangé est exempt de silice ou comprend au plus 30 % en poids sec de silice, de préférence au plus 20 % en poids sec, de préférence au plus 10 % en poids sec, de préférence au plus 5 % en poids sec,
**caractérisé en ce que**
le précurseur mélangé est sensiblement exempt de matériaux ayant des propriétés de liaison hydraulique, et
**en ce que** l'étape de mise en réaction du précurseur façonné avec du dioxyde de carbone a lieu à une température d'au moins 30 °C et une pression d'au moins 5 bar.

2. Procédé selon la revendication 1, dans lequel la source métallique particulaire a une distribution granulométrique dont la granulométrie aux 50 centiles est inférieure ou égale à 1 mm, de préférence inférieure ou égale à 500 µm, de préférence inférieure ou égale à 250 µm, de préférence inférieure ou égale à 100 µm.

3. Procédé selon la revendication 1 ou 2, dans lequel le ou les métaux sont choisis dans le groupe constitué par : Mn, Fe, Co, Ni, Cu, Zn, Cd et Pb, de préférence le ou les métaux sont choisis dans le groupe constitué par le fer et le zinc.

4. Procédé selon la revendication 3, dans lequel la source métallique particulaire comprend ou est constituée d'un ou de plusieurs éléments parmi : le fer métallique, le zinc métallique, un sel alcalin du ou des métaux, une solution du ou des métaux ayant un pH d'au moins 3,5, un hydroxyde du ou des métaux, et un silicate du ou des métaux.

5. Procédé selon l'une quelconque des revendications précédentes, dans lequel la source aqueuse est de l'eau, et dans lequel l'eau est ajoutée à la source métallique particulaire selon un rapport liquide sur solide de 0,5 ou moins.

6. Procédé selon l'une quelconque des revendications précédentes, dans lequel le précurseur mélangé est exempt de silice ou comprend au plus 9 % en poids sec de silice, de préférence au plus 5 % en poids sec, de préférence au plus 1 % en poids sec.

7. Procédé selon l'une quelconque des revendications précédentes, dans lequel la source d'ions carbonate ou bicarbonate comprend un gaz comprenant au moins 15 % en volume de dioxyde de carbone, de préférence au moins 30 % en volume de dioxyde de carbone, le gaz étant introduit dans l'environnement réactionnel.

8. Procédé selon l'une quelconque des revendications précédentes, dans lequel l'environnement réactionnel est saturé avec de la vapeur d'eau.

9. Procédé selon l'une quelconque des revendications précédentes, dans lequel dans l'étape de mise en réaction, au moins 5 % en poids de carbonates du ou des métaux sont formés de sorte que l'article lié par du carbonate a une résistance à la compression qui est au moins deux fois supérieure à la résistance d'un même article précurseur façonné traité sous une atmosphère d'azote exempte de dioxyde de carbone dans les mêmes conditions que lors de l'étape de mise en réaction.

10. Procédé selon l'une quelconque des revendications précédentes, dans lequel l'étape de mise en réaction dans le milieu réactionnel est réalisée pendant une durée comprise entre 15 minutes et 20 heures, de préférence entre 1 heure et 16 heures, de préférence entre 30 minutes et 2 heures.

11. Article lié par du carbonate, comprenant au moins 5 % en poids de carbonates d'un ou de plusieurs métaux de transition et/ou de post-transition, dans lequel les carbonates agissent comme un liant, dans lequel l'article lié par du carbonate a une résistance à la compression d'au moins 40 MPa, de préférence d'au moins 45 MPa, de préférence au moins 50 MPa, dans lequel l'article lié par du carbonate peut être obtenu par le procédé selon l'une quelconque des revendications 1 à 10, dans lequel au moins 5 % en poids de carbonates du ou des métaux de transition et/ou de post-transition sont formés de sorte que l'article lié par du carbonate a une résistance à la compression qui est au moins deux fois supérieure à celle d'un article précurseur façonné traité sous une atmosphère d'azote exempte de dioxyde de carbone dans les mêmes conditions que lors de l'étape de mise en réaction.

12. Article lié par du carbonate selon la revendication 11, comprenant au moins 0,5 % en poids de sidérite et/ou de smithsonite, de préférence au moins 1 %, de préférence au moins 5 %, de préférence au moins 10 % en poids, de préférence au moins 15 % en poids, de préférence au moins 20 % en poids.

13. Article lié par du carbonate selon la revendication 11 ou 12, dans lequel l'article lié par du carbonate est exempt d'oxydes de métaux de transition et/ou de post-transition, ou comprend 10 % ou moins en poids d'oxydes de métaux de transition et/ou de post-transition, de préférence moins de 5 % ou moins en poids, de préférence 2 % ou moins en poids.

14. Article lié par du carbonate selon l'une quelconque des revendications 11 à 13, dans lequel le ou les métaux de transition et/ou de post-transition sont choisis parmi le groupe constitué par : Mn, Fe, Co, Ni, Cu, Zn, Cd et Pb.

15. Article lié par du carbonate selon la revendication 14, dans lequel le ou les métaux de transition et/ou de post-transition sont du Fe et/ou du Zn.
